# EUROPEAN PATENT APPLICATION

(11) **EP 1 787 824 A1**
(43) Date of publication of application: **23.05.2007**
(21) Application number: 06380276.3
(22) Date of filing: 26.10.2006
(51) Int. Cl.: B60B 33/00

(54) **A rolling assembly**

(30) Priority: 17.11.2005 ES 200502531
(71) Applicant: JANE, S.A., 08184 Palau de Plegamans (Barcelona) (ES)
(72) Inventor: Jane Santamaria, Manuel c/o Jane S.A., 08184 Palau De Plegamans, Barcelona (ES)
(74) Representative: Pastells Teixido, Manuel

(57) **Abstract**

This rolling assembly comprises a support having a double wheel fitted to it and is characterised in that the support (1) has a circular opening (3) into which a circular spindle (5, 6) being provided at one side of each wheel (7, 8) is inserted from each side, said spindles being thereupon fixedly attached to each other. A bearing being preferentially made up by a self-lubricating bushing is arranged on the periphery of the circular opening (3) of the support (1).

## Description

### FIELD OF THE INVENTION

This rolling assembly is preferentially designed to be used in prams, although it also turns out to be advantageous for other applications both in the domestic and in the industrial fields.

### BACKGROUND OF THE INVENTION

Rolling assemblies are known which are made up by a support having a double wheel fitted to it, the two wheels being twin wheels being joined to each other by means of an axle being linked to said support.

### SUMMARY OF THE INVENTION

The present invention has as is object a rolling assembly comprising a double wheel and being characterised by its simplified makeup omitting the axle to which the two wheels are fixedly attached as per the conventional arrangement.

The support for such a purpose has a circular opening into which a circular spindle being provided at one side of each wheel is inserted from each side, said spindles being thereupon fixedly attached to each other.

In order to prevent the direct friction of these spindles with the periphery of the opening of the support during the rotation of the wheels it has been foreseen to arrange on said periphery a bearing such as a self-lubricating bushing.

The aforementioned wheel spindles will be axially hollow and will thus bring about a substantial weight reduction and cause a surprising impression when seeing that the wheels are turning without the presence of an axle joining them.

These and other features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:

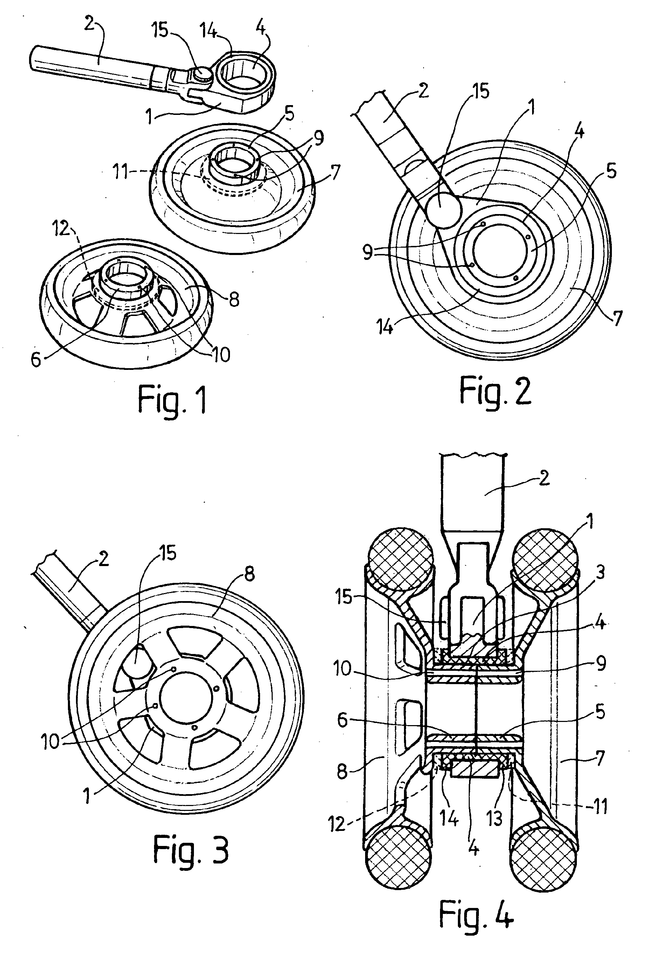

Fig. 1 illustrates in a perspective view the three components of the rolling assembly;
Figs. 2 and 3 respectively show in a side elevation the support having one wheel and the two wheels fitted to it; and
Fig. 4 is a sectional elevation of the rolling assembly.

### DETAILED DESCRIPTION

According to the drawings the rolling assembly being the object of this invention comprises a support (1) being for example fitted to a leg (2) of a pram and having a circular opening (3) on whose periphery a bearing (4) such as a bushing being made of nylon or of another self-lubricated material is arranged.

A circular spindle (5) and (6) being provided at one side of each wheel (7) and (8) is inserted into said opening (3), said spindles in such an arrangement facing each other (Fig. 4) and being fixedly attached to each other with screws or rivets extending through transversal holes (9) and (10) being provided in them.

In order to prevent a direct friction of the sides of the wheels with those of the support the wheels (7) and (8) can be provided with self-lubricated washers (11) and (12) making contact with the lateral flanges (13) and (14) being determined by the U-shaped section of the bearing (4).

This rolling assembly can be equipped with suspension means (15) and braking elements (not shown).

## Claims

1. A rolling assembly comprising a support having a double wheel fitted to it, **characterised in that** the support (1) has a circular opening (3) into which a circular spindle (5, 6) being provided at one side of each wheel (7, 8) is inserted from each side, said spindles being thereupon fixedly attached to each other.

2. A rolling assembly as per claim 1, **characterised in that** a bearing (4) is arranged on the periphery of the circular opening (3) of the support (1).

3. A rolling assembly as per claim 2, **characterised in that** the bearing (4) is made up by a self-lubricating bushing.

4. A rolling assembly as per claim 1, **characterised in that** the spindles (5, 6) are axially hollow.
